Europäisches Patentamt

European Patent Office

Office européen des brevets

(11) Publication number: **0 173 015**
**B1**

## EUROPEAN PATENT SPECIFICATION

(45) Date of publication of patent specification: **21.09.88**

(21) Application number: **85107652.1**

(22) Date of filing: **20.06.85**

(51) Int. Cl.⁴: **B 23 B 31/06**

(54) A connection device.

(30) Priority: **27.08.84 US 644640**

(43) Date of publication of application:
**05.03.86 Bulletin 86/10**

(45) Publication of the grant of the patent:
**21.09.88 Bulletin 88/38**

(84) Designated Contracting States:
**AT BE CH DE FR GB IT LI LU NL SE**

(56) References cited:
**CH-A- 236 266**
**CH-A- 270 900**
**CH-A- 347 406**
**DE-C- 262 662**
**DE-U-1 818 909**
**US-A-3 342 502**
**US-A-3 999 769**

(73) Proprietor: **ERICKSON TOOL COMPANY**
**34300 Solon Road**
**Solon Ohio 44139 (US)**

(72) Inventor: **Ramunas, Valdas S.**
**2025 East 226th Street**
**Euclid Ohio 44117 (US)**

(74) Representative: **Meddle, Alan Leonard et al**
**FORRESTER & BOEHMERT Widenmayerstrasse**
**4/I**
**D-8000 München 22 (DE)**

Courier Press, Leamington Spa, England.

## Description

This invention relates to a connection device, in particular a quick-connect connection device.

Coupling or connection devices for interconnecting two members have taken many different forms. In the machine tool field, tool holders are coupled to tool holder sockets and secured therein in many different ways. A typical tool holder socket may be cylindrical or conical, and the conical type of socket may have a threaded drawbar which is disposed within the socket so as to be coaxial with the tool holder to draw the tool holder tightly into seated engagement in the tool holder socket. A threaded drawbar to secure a conical tool holder in a conical socket is shown in U.S. Patent No. 4,412,766.

U.S. Patent 1,062,630 discloses a connection device in which segmented jaws are moved by a screw-threaded member into engagement in a groove in the tool to connect the tool to the holder.

In recent years, tool holders have been more widely used in tool holder sockets, and the tool holders, in turn, receive different-sized tools. Self-locking conically tapered holders have been used, such as shown in U.S. Patent 3,024,030. After use, the tool holder must be driven out to be removed. To secure the tool holders in the socket, an annular groove has been used on the tool holder with radially movable jaws engaging the groove, as disclosed in U.S. Patent 3,999,769.

U.S. Patent 3,759,536 shows a conical tool holder in a conical socket, the tool holder being sucured in the socket by means of a T-shaped head which is provided at the small end of the cone and which fits through an aperture in a threaded member, the threaded member then being rotated to tighten the tool holder into the socket.

U.S. Patent No. 4,328,975 shows a conical tool holder with a circular flange at the large end of the cone and a rotatable locking member which acts on the circular flange to secure the tool holder in the socket.

U.S. Patent No. 3342502, which is the nearest prior art discloses a connection device comprising a male member, a body defining a socket for receiving the male member, cam means mounted on the body for rotation relative to the socket. Knurling on the cam means enables the cam means to be rotated in a first direction to bring a locking surface of the cam into engagement with the head of a spring-loaded pin engaging with an abutment surface of the male member to lock the male member in the socket and in a second direction opposite to the first direction to release the engagement between the cam locking surface and the abutment surface.

It is an object of the present invention to provide a mechanically simple connection device which locks positively yet is easily connected and disconnected.

According to the present invention, there is provided a connection device, comprising a male member and a socket therefor, cam means rotatable relative to the socket, and means for rotating the cam means in a first direction to bring a locking surface of the cam into engagement with an abutment surface of the male member to lock the male member in the socket and for rotating the cam means in a second direction opposite to the first direction to release the engagement between the cam locking surface and the abutment surface, the socket defining an elongate recess for receiving the male member, the device being characterised in that the recess has a cam follower surface in which the cam means is journalled so as to be rotatable about an axis offset from the axis of the recess.

The present invention enables the provision of a connection device which is simple, reliable, and positive, yet quick-acting in both connection and disconnection. Moreover, the device may have only a single moving part in the form of the cam means. ·

Preferably the cam means is a single circular cam disc which is eccentrically mounted in the socket for positive locking and ejection of the male member which may be a tool holder.

For a better understanding of the present invention, and to show how the same may be put into effect, reference will now be made, by way of example, to the accompanying drawings in which:

Figure 1 is a front elevational view of a connection device embodying the invention;

Figure 2 is a sectional view taken on line 2—2 of Figure 1;

Figure 3 is a sectional view taken on line 3—3 of Figure 2;

Figure 4 is a sectional view taken on line 4—4 of Figure 2; and

Figure 5 is a view similar to that of Figure 4, but with cam means of the connection device in a locking position.

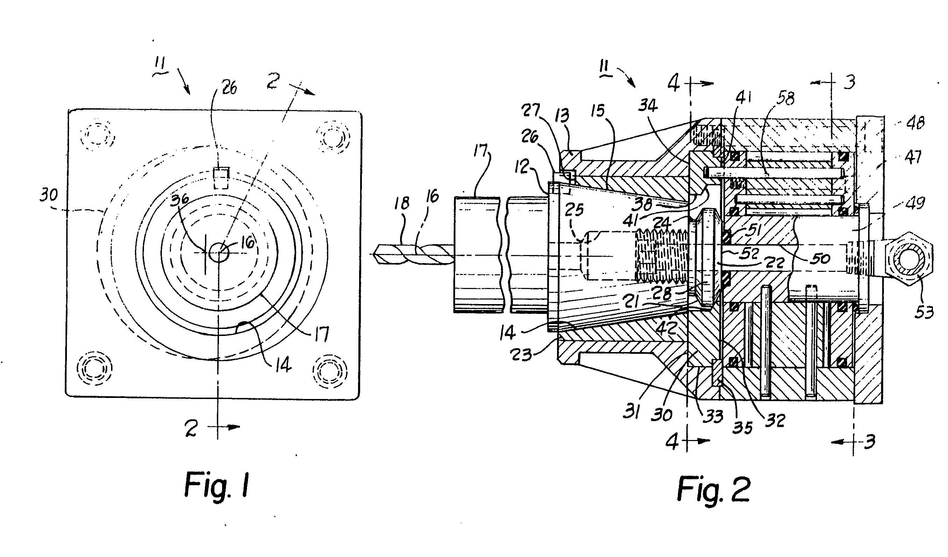

Referring now to the drawings, Figures 1 to 5 illustrate a quick-connect and quick-disconnect connection device or mechanism 11 constructed in accordance with the invention. The mechanism 11 may be used with hoses and other conduits for providing a quick-connect connection for passage of fluid under pressure, or it may be used to interconnect almost any two members.

In the drawings, the mechanism 11 is shown as including a male member 12 and a female member or socket member 13. The socket member 13 has a longitudinal aperture 14 extending along a longitudinal axis 16 thereof for closely receiving the male member 12 so that the male member is coaxial with the aperture 14. In the case of many tool holder mechanisms, the aperture 14 may be a cylindrical aperture, but is shown as a frusto-conical aperture in which a male frusto-cone 15 of the male member 12 may be seated.

The male member 12 may be a tool holder to receive a rotatable or stationary tool and, in the drawings, the male member 12 is shown as receiving a stationary tool which carries a fluid motor 12 adapted to actuate a tool such as pincers on a robot-actuated arm, or, as shown, adapted to rotate a tool such as a drill 18 relative to the male frusto-cone 15.

The male member 12 has a lockable abutment surface 21 and an expulsion surface 22. The lockable abutment surface 21 faces in a first longitudinal direction, which is toward an entrance 23 or large end of the frusto-conical longitudinal aperture 14, that is toward the left as viewed in Figure 2. The expulsion surface 22 faces in the opposite or a second longitudinal direction toward the right as viewed in Figure 2. In the preferred embodiment, in order to achieve the lockable abutment surface 21, an annular groove 24 is formed on the small end of the male frusto-cone 15 to define an annular button 28 presenting the surfaces 21 and 22 as annular surfaces, which, in this case, have circular peripheries. As shown, the surfaces 21 and 22 are frusto-conical surfaces established, for example, at a 120-degree included angle. The male frusto-cone 15 has a fluid passageway 25 extending coaxially therethrough for passage of fluid to actuate the fluid motor 17. The male frusto-cone carries a pin or key 26 to enter a keyway 27 provided at the entrance 23 of the socket 13 to prevent relative rotation between the male cone 15 and the socket member 13 when the male member is engaged in the socket member 13.

Cam means 30 is mounted for movement in the socket member 13. In the preferred embodiment, the cam means is a single cam disc having front and rear faces 31 and 32, respectively, and a circular periphery 33. The cam means 30 is journalled for rotation in the socket member 13 and is mounted in a circular recess which forms an eccentric cam follower surface 34. The cam follower surface 34 is circular about a second axis 36 spaced from the axis 16 of the socket member. In the preferred embodiment, the axes 16 and 36 are parallel. A ring 35 engages the rear face 32 of the cam means to hold the cam means 30 in the recess 34.

The cam means 30 has an aperture 38, in this case near the centre of the cam means, to receive the lockable abutment surface 21 on the button 28.

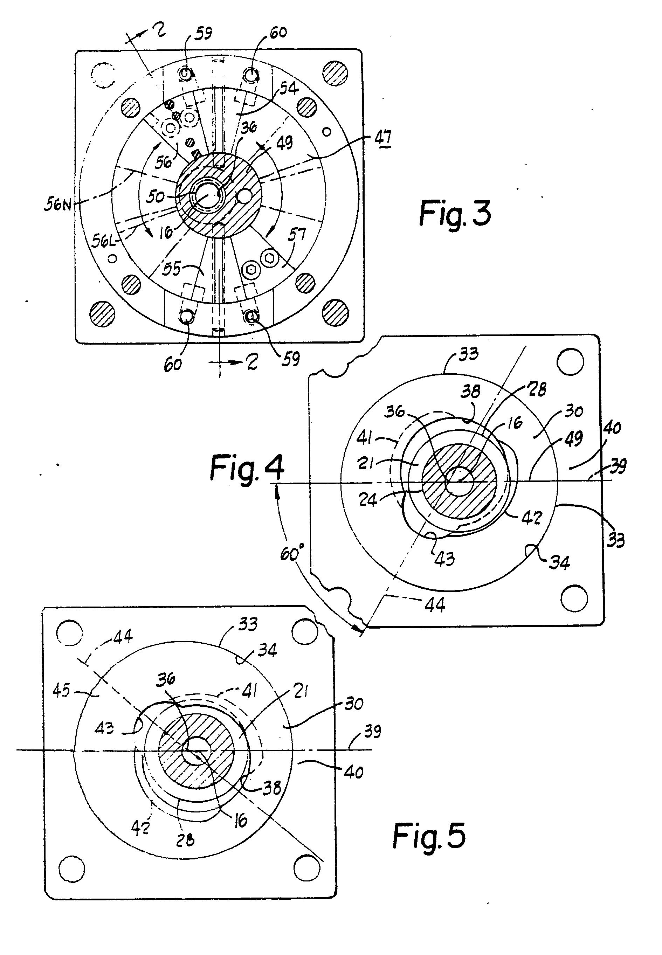

The aperture 38 of the cam means 30 is shaped to define a locking surface 41 and an expelling surface 42 as shown in Figures 4 and 5. The cam locking surface 41 faces in the second longitudinal direction, that is toward the right as viewed in Figure 2, and the cam expelling surface 42 faces in the first longitudinal direction. In the preferred embodiment, the locking and expelling surfaces are frusto-conical, and are complementary in shape to the lockable abutment surface 21 and the expulsion surface 22, respectively. Thus, the locking and expelling surfaces are disposed at a 120-degree included conical angle. The aperture 38 has a small radius cut-out 43 which helps to define on end of each of the locking and expelling surfaces.

The cam means 30 may be manually rotatable, may be spring-urged in at least one direction, may be moved by a rack and pinion but, in the preferred embodiment, is moved by a fluid motor 47. The fluid motor 47 is secured to the socket member 13 by machine screws 48 to hold the ring 35 in place. The fluid motor 47 has a central hub 49 extending along the second axis 36. A fluid passageway 50 is coaxial with the first longitudinal axis 16 and registers with the fluid passageway 25 in the male cone 15. An O-ring 51 seals the hub 49 against a free end surface 52 of the button 28 formed by the annular groove 24. The O-ring 51 seals the fluid pressure within the passageways 25 and 50, which fluid may be air to actuate the fluid motor 17. A fluid fitting 53 admits fluid to the passageways 25 and 50.

The fluid motor 47 has two fixed vanes 54 and 55 and two rotatable vanes 56 and 57 which may rotate the cam means 30 through a maximum of 120 degrees, by means of longitudinal pins 58. Fluid, such as air, may be introduced via two inlets 59, or alternatively, via inlets 60.

The introduction of fluid into the inlets 59 induces rotation of the rotatable vanes 56 and 57 in a first direction, that is in a counter-clockwise direction as shown in Figure 3, causing the cam means 30 to rotate to bring the lockable abutment surface 21 into engagement with the locking surface 41 to lock the male member 12 within the socket. The engaging position is shown in Figure 5. When fluid is introduced into the inlets 59, the fluid induces rotation of the two rotatable vanes 56 and 57 in a second direction opposite to the first direction, that is in a clockwise direction in Figure 3, moving the locking surface 41 out of engagement with the lockable abutment surface and bringing the expelling surface 42 into engagement with the expulsion surface 22 to bring the male member 12 to the expelling position shown in Figures 1 to 4.

The operation of the device will now be described in detail with reference to the drawings in which Figures 1 to 4 show the connection device in a condition for expelling the male member from the socket and Figure 5 shows the device in a condition locking the male member in the socket.

In the interests of simplicity, the operation of the device will be described with reference to two axes of symmetry, one axis of symmetry 39 being a diameter of the cam follower surface, which diameter bisects an upper half including a part 40 and a lower half of the surface 43. The other axis of symmetry 44 is a diameter of the cam means which bisects the cutout or recess 43 and also a first half including a part 45 and a second half of the cam means.

As shown in Figure 2, the cam expelling surface 42 is in engagement with the expulsion surface 22 on the button 28 of the male member 12 preventing complete seating of the male frusto-cone 15 in the socket 13. When the cam means 30 is rotated in the first direction (counterclockwise in Figure 3 and clockwise in Figures 1, 4 and 5), for example by fluid pressure in the inlets 59, locking of the male member 12 results when the abutment surface 21 is engaged by the locking surface 41. Thus, the vane 56 is rotated about 90 or 100 degrees from the position shown in Figure 3 to the locked position 56L shown in dot-dash lines in Figure 3. In the locked position shown in Figure 5, the cam locking surface 41 on the cam means 30 is wedged against the lockable abutment surface 21 on the male member 12 to lock the male member 12 in the socket 13. This movement may be considered as being caused by two different things: (1) the eccentric mounting of the cam disc 30 which gives a radially inward component of movement to the locking surface 41; and (2) the frusto-conical shape of the cam locking surface 41 plus the aforementioned radial inward movement which gives a component of movement in the second longitudinal direction, that is to the right in Figure 2, which wedges or locks the male member 12 in the socket 13. Further, the frusto-conical surface of the lockable abutment surface 21 establishes a surface or area contact rather than merely a line contact with the cam locking surface 41.

When the fluid motor 47 and cam disc 30 are rotated in the second direction (clockwise as viewed in Figure 3), the mechanism 11 moves through an open or neutral position, to the expelling position shown in solid lines in Figure 3. The open or neutral position is shown in Figure 3 by the dot-dash line position 56N of the rotatable vane 56. In the open position, the male member 12 is free to be withdrawn, but if it is not readily disengagable from the socket 13, when the cam means 30 is moved to the expelling position, the cam expelling surface 42 engages the expulsion surface 22 on the male member 12 positively to expel the male member as shown in Figures 2 and 4.

Figures 4 and 5 illustrate the expelling and locking positions, respectively, of the device and it will be noted that the cut-out 43 which is bisected by the second axis of symmetry 44, is disposed on opposite sides of the first axis of symmetry 39 in Figures 4 and 5. For the locking action to take place, the cam locking surface 41 is moved toward the part 40 in the first half of the cam follower surface 34 and, similarly, to effect the expelling action, the cam expelling surface 42 is moved toward the point or part 40 of the cam follower surface 34. The cut-out 43 establishes the termination at one end of each of the cam locking and expelling surfaces, so that the locking and expelling surfaces do not interfere with one another in their separate action on the male member 12.

It will be appreciated from the drawings that the cam means 30 is a simple, single member which can be easily machined. Thus, the cam means 30 is a single member with a periphery at least part of which is circular, so as to be journalled within the circular cam follower surface 34. In the preferred embodiment, the cam means 30 is a continuous annular disc member for rigidity and simplicity of manufacture. The aperture 38 is readily machined by milling with two different diameter tools. The locking and expelling surfaces are milled from the opposite sides with a milling tool having a taper on the end thereof, a 30° degree taper in the case of the preferred embodiment which has the 120° degree included conical angle. Figures 4 and 5 show that the cam locking surface 41 is on one side of the second diametrical axis of symmetry 44 and the cam expelling surface 42 is on the other side of the axis 44.

It should of course be understood that the above-described embodiment has been described by way of example only and that various modifications in the details of construction and the combination and arrangement of parts may be possible.

Thus, the present invention provides a connection device or a quick-connect mechanism comprising a male member and a socket therefor, the socket having a longitudinal aperture for receiving the male member coaxially therein, the male member having a lockable abutment surface for facing in a first longitudinal direction toward the entrance of the socket, cam means being journalled in an eccentric cam follower surface on the socket for rotation about a second axis displaced from the axis of the socket, the cam means having an aperture for receiving the lockable abutment surface on the male member, a locking surface on the cam means facing in a second longitudinal direction opposite that of the lockable abutment surface, and means being provided for rotating the cam means in first and second opposite directions, whereby rotation in the first rotational direction rotates the cam locking surface to move the cam locking surface radially inwardly and in the second longitudinal direction to engage the lockable abutment surface to lock the male member in the socket and whereby rotation of the cam in said second direction unlocks the cam locking surface from the lockable abutment surface.

Preferably an expelling surface is provided on the cam means, which expelling surface is operable upon rotation of the cam in the second direction to expel the male member. The cam expelling surface generally faces in the first longitudinal direction. Conveniently an expulsion surface is provided on the male member facing in the second longitudinal direction for cooperating with the cam expelling surface when the cam means is rotated in the second direction. Preferably an annular groove is provided on the male member to define an annular flange, the lockable abutment surface and the expulsion surface being formed on opposite sides of the flange. The rotation means may include a fluid motor.

Generally, the cam locking surface is disposed on one side of a diametrical axis of symmetry of the cam means and the expelling surface may be disposed on the other side of the said axis of symmetry. Normally, the cam locking surface is a frusto-conical surface. Conveniently the cam locking surface is conical or at least frusto-conical to establish the component of movement in the second longitudinal direction concomitantly with the radially inward component of movement of the cam locking surface. Preferably the lockable abutment surface is frusto-conical. Conveniently the second axis is parallel to the said axis of the socket.

A fluid passageway may extend substantially coaxially through the socket and male member for fluid flow.

Normally, the cam follower surface is circular and surrounds the fluid passageway. Generally, the cam means is a single member with a periphery at least part of which is circular. Preferably, the socket has a conical or frusto-conical seat complementary to a conical or frusto-conical portion on the male member which is arranged to be established tightly in the seat by the cam locking surface.

## Claims

1. A connection device, comprising a male member (12) and a socket (13) therefor, cam means (30) rotatable relative to the socket, and means (47) for rotating the cam means in a first direction to bring a locking surface (41) of the cam into engagement with an abutment surface (21) of the male member to lock the male member in the socket and for rotating the cam means in a second direction opposite to the first direction to release the engagement between the cam locking surface and the abutment surface, the socket defining an elongate recess (14) for receiving the male member, the device being characterised in that the recess has a cam follower surface (34) in which the cam means is journalled so as to be rotatable about an axis (36) offset from the axis (16) of the recess.

2. A device according to claim 1, wherein the cam means has an expelling surface (42) for expelling the male member from the socket when the cam means is rotated in the second direction.

3. A device according to claim 2, wherein the male member expelling surface and the locking surface of the cam means are disposed on opposite sides of an axis of symmetry of the cam means.

4. A device according to claim 2 or 3, wherein an expulsion surface (22) is provided to cooperate with the cam expelling surface to expel the male member from the socket when the cam means is rotated in the second direction.

5. A device according to claim 4 wherein the abutment surface and the expulsion surface are defined by opposite faces of a flange (28) of the male member.

6. A device according to any preceding claim, wherein the cam means is formed with an aperture (38) for receiving the abutment surface of the male member.

7. A device according to any preceding claim wherein one or more of the abutment surface, the locking surface, the expulsion surface and the expelling surface is frusto-conical.

8. A device according to any preceding claim, wherein the socket has a frusto-conical seat (14) for receiving and engaging a corresponding frusto-conical portion (15) of the male member.

9. A device according to any preceding claim, wherein the socket and the male member are provided with a passageway (25) for supplying fluid therethrough.

10. A device according to any preceding claim wherein the cam means is a single member, the periphery of which is at least part circular.

11. A device according to any preceding claim, wherein the rotating means comprises a fluid motor (47).

## Patentansprüche

1. Verbindungsvorrichtung mit einem Steckteil (12) und einem Muffenteil (13) für dieses, einem relativ zu dem Muffenteil drehbares Nockenmittel (30) und einem Mittel (47) zum Verdrehen des Nockenmittels in eine erste Richtung, um eine Verriegelungsfläche (41) des Nockens in Kontakt mit einer Anlagefläche (21) des Steckteils zum Verriegeln des Steckteils in dem Muffenteil zu bringen und zum Drehen des Nockenmittels in eine zweite Richtung entgegengesetzt zu der ersten Richtung zum Lösung des Kontaktes zwischen der Nockenverriegelungsfläche und der Anlagefläche, wobei das Steckteil eine längliche Ausnehmung (14) zum Aufnehmen des Steckteils aufweist, dadurch gekennzeichnet, daß die Ausnehmung eine Nockenfolgefläche (34) hat, in der das Nockenmittel um eine Achse (36), die von der Achse (16) der Ausnehmung versetzt ist, drehbar gelagert ist.

2. Vorrichtung nach Anspruch 1, wobei das Nockenmittel eine Ausstoßfläche (42) zum Ausstoßen des Steckteils aus dem Muffenteil, wenn das Nockenmittel in der zweiten Richtung gedreht wird, aufweist.

3. Vorrichtung nach Anspruch 2, wobei die Ausstoßfläche des Steckteils und die Verriegelungsfläche des Nockenmittels an gegenüberliegenden Seiten der Symmetrieachse des Nockenmittels angeordnet sind.

4. Vorrichtung nach Anspruch 2 oder Anspruch 3, wobei eine Austreibfläche (22) vorgesehen ist, die mit der Ausstoßfläche zusammenwirkt zum Ausstoßen des Steckteils aus dem Muffenteil, wenn das Nockenmittel in die zweite Richtung gedreht wird.

5. Vorrichtung nach Anspruch 4, wobei die Auflagefläche und die Austreibfläche durch gegenüberliegende Flächen eines Flansches (28) des Steckteils gebildet werden.

6. Vorrichtung nach einem der vorangehenden Ansprüche, wobei das Nockenmittel mit einer Öffnung (38) zur Aufnahme der Auflagefläche des Steckteils versehen ist.

7. Vorrichtung nach einem der vorangehenden Ansprüche, wobei die Anlagefläche, die Verriegelungsfläche, die Ausstoßfläche und/oder die Austreibfläche kegelstumpfförmig sind.

8. Vorrichtung nach einem der vorangehenden Ansprüche, wobei das Muffenteil einen kegelstumpfförmigen Sitz (14) zum Aufnehmen und Kontaktieren eines entsprechend kegelstumpfförmigen Abschnitts (15) des Steckteils aufweist.

9. Vorrichtung nach einem der vorangehenden Ansprüche, wobei das Muffenteil und das Steckteil mit einem Durchgang (25) zum Zuführen eines Fluids durch dieses versehen ist.

10. Vorrichtung nach einem der vorangehenden Ansprüche, wobei das Nockenmittel ein einstückiges Element ist, dessen Umfang wenigstens teilweise kreisförmig ist.

11. Vorrichtung nach einem der vorangehenden Ansprüche, wobei das Drehmittel einen Fluidmotor (47) aufweist.

**Revendications**

1. Un dispositif de liaison, comprenant un élément mâle (12) et une douille (13) pour celui-ci, un moyen à came (30) rotatif par rapport à la douille, et des moyens (47) pour tourner le moyen à came suivant une première direction afin d'amener une surface de verrouillage (41) de la came en contact avec une surface de butée (21) de l'élément mâle pour verrouiller l'élément mâle dans la douille et pour tourner le moyen à came suivant une seconde direction opposée à la première direction afin de libérer le contact entre la surface de verrouillage de came et la surface de butée, la douille définissant une cavité allongée (14) pour recevoir l'élément mâle, le dispositif étant caractérisé en ce que la cavité a une surface de guidage de came (34) dans laquelle le moyen à came est tourillonné afin d'être rotatif autour d'une axe (36) décalé de l'axe (16) de la cavité.

2. Un dispositif selon la revendication 1, dans lequel le moyen à came a une surface expulsive (42) pour expulser l'élément mâle de la douille lorsque le moyen à came est tourné suivant la seconde direction.

3. Un dispositif selon la revendication 2, dans lequel la surface expulsive de l'élément mâle et la surface de verrouillage du moyen à came sont disposées sur les côtés opposés d'un axe de symétrie du moyen à came.

4. Un dispositif selon la revendication 2 ou 3, dans lequel une surface d'expulsion (22) est prévue pour coopérer avec la surface expulsive de came afin d'expulser l'élément mâle de la douille lorsque le moyen à came est tourné suivant la seconde direction.

5. Un dispositif selon la revendication 4 dans lequel la surface de butée et la surface d'expulsion sont définies par des faces opposées d'une collerette (28) de l'élément mâle.

6. Un dispositif selon une quelconque revendication précédente, dans lequel le moyen à came est conçu avec un orifice (38) pour recevoir la surface de butée de l'élément mâle.

7. Un dispositif selon une quelconque revendication précédente, dans lequel l'une ou plus de la surface de butée, la surface de verrouillage, la surface d'expulsion et la surface expulsive est tronconique.

8. Un dispositif selon une quelconque revendication précédente, dans lequel la douille a un siège tronconique (14) pour recevoir et s'engager avec une portion tronconique correspondante (15) de l'élément mâle.

9. Un dispositif selon une quelconque revendication précédente, dans lequel la douille et l'élément mâle sont prévus avec une canalisation (25) pour fournir le fluide à travers ceux-ci.

10. Un dispositif selon une quelconque revendication précédente, dans lequel le moyen à came est un unique élément, la périphérie duquel est au moins en partie circulaire.

11. Un dispositif selon une quelconque revendication précédente, dans lequel les moyens pour tourner comprennent un moteur à fluide (47).

0 173 015

Fig. 2

Fig. 1

Fig. 3

Fig. 4

Fig. 5